# EUROPEAN PATENT SPECIFICATION

(11) **EP 3 650 267 B1**
(45) Date of publication and mention of the grant of the patent: **16.11.2022**
(21) Application number: 19206643.9
(22) Date of filing: 31.10.2019
(51) Int. Cl.: B60N 2/00, B60N 2/02, B60N 2/06, B60N 2/16, B60N 2/22

(54) **CONTROL DEVICE FOR VEHICLE, SYSTEM, METHOD AND STORAGE MEDIUM**
STEUERUNGSVORRICHTUNG FÜR FAHRZEUG, SYSTEM, VERFAHREN UND SPEICHERMEDIUM
DISPOSITIF DE COMMANDE POUR VÉHICULE, SYSTÈME, PROCÉDÉ ET SUPPORT D'INFORMATIONS

(30) Priority: 06.11.2018 JP 2018209036
(43) Date of publication of application: 13.05.2020
(73) Proprietor: TOYOTA JIDOSHA KABUSHIKI KAISHA, Toyota-shi, Aichi-ken, 471-8571 (JP)
(72) Inventor: UI, Shuichi, TOYOTA-SHI, AICHI-KEN, 448-8651 (JP)
(74) Representative: Cabinet Beau de Loménie

(56) References cited:
- WO-A1-2015/049181
- DE-A1-102016 105 284

## Description

### BACKGROUND

### Technical Field

The present disclosure relates to a control device for a vehicle, a system, a method and a storage medium storing a program that controls a seat position in the vehicle.

### Related Art

International Publication (WO) No. 2015/162781 discloses a technology that, when a driver of a vehicle sits on a driver seat, adjusts the position of the driver seat so as to reduce an offset between the height of a standard position of a head-up display disposed in the vehicle and the height of a position of the eyes of the driver. International Publication (WO) No. 2015/049181 discloses a method for presetting vehicle seats, wherein the vehicle seat comprises at least parts of a presetting device.

However, the seat position may not necessarily be adjusted to a suitable position simply by matching the height of the standard position of the head-up display disposed in the vehicle with the height of the position of the eyes of an occupant of the vehicle. Moreover, in order to match the height of the standard position of the head-up display disposed in the vehicle with the height of the position of the eyes of an occupant of the vehicle, it is necessary for the occupant to sit on the seat. The occupant must then wait until adjustment of the seat position is completed. In these respects, there is room for improvement in regard to convenience for an occupant boarding a vehicle.

### SUMMARY

The present disclosure has been devised in consideration of the circumstances described above and provides a control device for a vehicle, a system, a method and a storage medium storing a program that may enable convenience for an occupant boarding the vehicle.

One aspect of the present disclosure is a control device for a vehicle according to claim 1.

According to the present aspect, before an occupant boards the vehicle, in accordance with information relating to the vehicle that the occupant is boarding and the outward form of the occupant, control is executed to adjust the seat position in the vehicle to a position specified as being an optimal position. Thus, the seat position is adjusted to a suitable position before the occupant boards the vehicle, and therefore the occupant may board the vehicle with convenience.

In the present aspect, the control section may acquire the specified position corresponding to the information relating to the vehicle and the outward form of the occupant from historical accumulated data, and execute the control to adjust the seat position to the acquired position.

According to this configuration, because the seat position is adjusted using the historical accumulated data, the seat position may be adjusted to a more suitable position.

In the present aspect, the information relating to the outward form of the occupant includes information relating to a body type of the occupant and clothing of the occupant.

According to this configuration, because the seat position is adjusted in accordance with the body type of the occupant and the clothing of the occupant, the seat position may be adjusted to a more suitable position.

In the present aspect, the body type of the occupant may include an arm length, a leg length and a pelvis position of the occupant.

According to this configuration, because the seat position is adjusted in accordance with a detailed body type of the occupant, the seat position may be adjusted to a more suitable position.

The present aspect may further include a detection section that detects in a case in which the occupant is located within a predetermined distance from the vehicle, and the control section may execute the control when the detection section detects that the occupant is located within the predetermined distance from the vehicle.

According to this configuration, the control to adjust the seat position may be executed before the occupant boards.

In the present aspect, if the seat position is modified by the occupant after the control to adjust the seat position is executed, the control section may execute control to update the specified position in the historical data corresponding with the information relating to the vehicle and the outward form of the occupant to the seat position subsequent to the modification by the occupant.

According to this configuration, because a modification of the seat position by the occupant is reflected in the accumulated data, the seat position may be adjusted to a more suitable position on a subsequent occasion.

In the present aspect, the historical accumulated data may be stored at an information processing device outside the vehicle, and the control section may send at least the information relating to the outward form of the occupant to the information processing device and receives the specified position corresponding with the information relating to the vehicle and the outward form of the occupant from the information processing device.

Another aspect of the present disclosure is a vehicle control system according to claim 7. The vehicle system including: the control device for a vehicle according to the first aspect; and an information processing device that stores accumulated data of seat positions corresponding with vehicles and outward forms of occupants, wherein the control section of the control device is configured to: send the information relating to the vehicle and the outward form of the occupant to the information processing device, receive the specified position corresponding with the information relating to the vehicle and the outward form of the occupant from the information processing device, and execute the control to adjust the seat position to the received specified position.

Yet another aspect of the present disclosure is a vehicle control method according to claim 8.

Yet another aspect of the present disclosure is a non-transitory storage medium according to claim 9.

According to the present disclosure, an effect is provided in that an occupant may board the vehicle with convenience.

### BRIEF DESCRIPTION OF THE DRAWINGS

Fig. 1 is a block diagram illustrating an example of system structures of a control system according to an exemplary embodiment.
Fig. 2 is a diagram illustrating an example of accumulated data according to the exemplary embodiment.
Fig. 3 is a diagram describing a seat position according to the exemplary embodiment.
Fig. 4 is a block diagram illustrating an example of hardware structures of a control device according to the exemplary embodiment.
Fig. 5 is a block diagram illustrating an example of functional structures of the control device according to the exemplary embodiment.
Fig. 6 is a flowchart illustrating an example of a flow of seat position adjustment processing according to the exemplary embodiment.
Fig. 7 is a flowchart illustrating an example of a neural network model according to a variant example.

### DETAILED DESCRIPTION

Herebelow, an example of an exemplary embodiment for carrying out the present disclosure is described in detail with reference to the attached drawings.

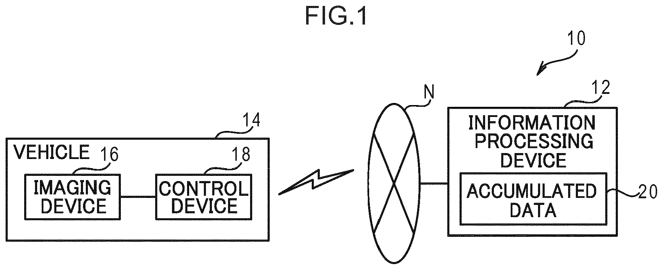

First, structures of a control system 10 according to the present exemplary embodiment are described with reference to Fig. 1. As illustrated in Fig. 1, the control system 10 includes an information processing device 12, an imaging device 16 and a control device 18. The imaging device 16 and control device 18 are mounted in a vehicle 14. The control system 10 is an example of a system that adjusts a seat position of a driver seat of the vehicle 14. The control device 18 is an example of a control device for a vehicle. The information processing device 12 and the control device 18 are each connected to a network N, and are capable of communicating via the network N. A cloud server may be mentioned as an example of the information processing device 12, and an electronic control unit (ECU) may be mentioned as an example of the control device 18.

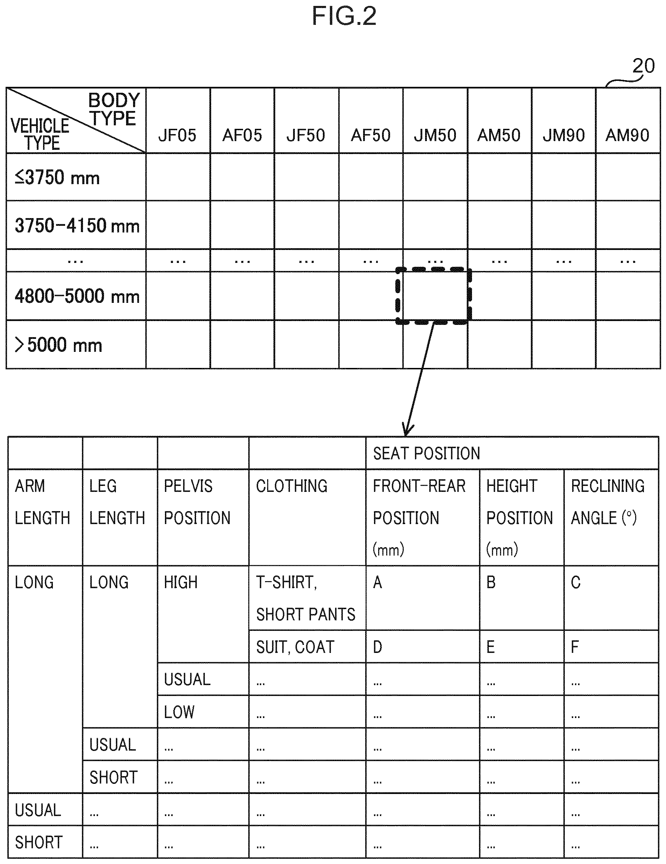

Accumulated data 20 is stored in a storage unit (not illustrated in the drawings) provided at the information processing device 12. The accumulated data 20 is data in which seat positions are accumulated in association with various combinations of occupants and vehicles. The seat positions are positions specified historically as being optimal positions. Details of the accumulated data 20 are described with reference to Fig. 2.

As illustrated in Fig. 2, in the accumulated data 20 according to the present exemplary embodiment, an optimal seat position of the driver seat is stored for each combination of vehicle type and body type of an occupant. As illustrated in the upper part of Fig. 2, the present exemplary embodiment depicts a case in which vehicle types are categorized by the total lengths of vehicles, but this is not limiting. For example, vehicle types may be categorized by the wheelbases of vehicles, or vehicle types may be categorized by classes of vehicles, such as compact, sedan, minivan, station wagon and the like. As another example, vehicle types may be categorized by a distance from the pelvis of an occupant to the accelerator pedal when the occupant is sitting on the driver seat.

As illustrated in the upper part of Fig. 2, the present exemplary embodiment depicts a case in which the general body types of occupants are categorized by definitions of automobile crash test dummies, but this is not limiting. The general body types of occupants may be categorized by combinations of height and weight. As illustrated in the bottom part of Fig. 2, the accumulated data 20 stores an optimal seat position of the driver seat for each combination of a detailed body type of an occupant-meaning the occupant's arm length, leg length and pelvis position-and clothing of the occupant. The pelvis position according to the present exemplary embodiment is the position of the pelvis measured from the feet. The present exemplary embodiment depicts a case in which the lower the position of the pelvis, the higher the seat height.

That is, in the accumulated data 20 according to the present exemplary embodiment, an optimal seat position of the driver seat is stored for each combination of vehicle type, general body type of the occupant, detailed body type of the occupant and clothing of the occupant. The general body type of the occupant, detailed body type of the occupant and clothing of the occupant are examples of information relating to the outward form of the vehicle occupant. The seat positions that are stored in the accumulated data 20 according to the present exemplary embodiment are, for example, optimal positions for a state in which clothing that would be expected to be removed in the vehicle, such as a thick coat or the like, is removed.

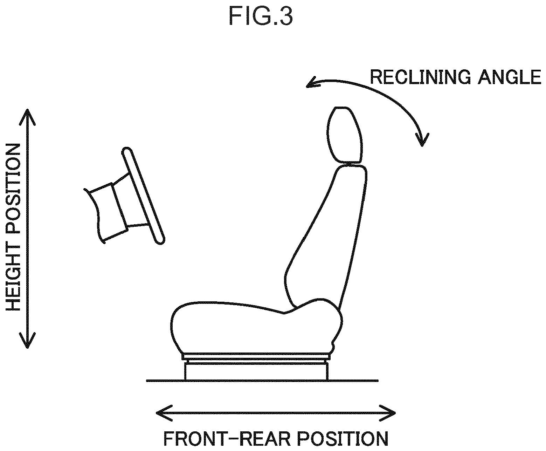

As illustrated in the bottom part of Fig. 2 and in Fig. 3, in the present exemplary embodiment, a position of the driver seat in the front-and-rear direction of the vehicle (below referred to as a front-rear position), a position of the driver seat in the height direction of the vehicle (below referred to as the height position), and a reclining angle are employed as the seat position. A distance from a distal end of a seat cushion when the driver seat is adjusted to a rearmost position in the front-rear direction of the vehicle to the distal end of the seat cushion at a current seat position of the driver seat is employed as a current front-rear position in the present exemplary embodiment. A distance from a sitting surface of the seat cushion when the driver seat is adjusted to a lowest position in the height direction of the vehicle to the seat surface of the seat cushion at the current seat position of the driver seat is employed as a current height position of the driver seat in the present exemplary embodiment. A tilt angle of a seat back relative to the seat cushion is employed as the reclining angle in the present exemplary embodiment. In the example in Fig. 2, the arm length, leg length and pelvis position are each categorized into three levels. However, embodiment is not limited to this and each may be categorized into two levels or may be categorized into four or more levels.

The imaging device 16 is equipped with an imaging device such as a charge-coupled device (CCD) image sensor, a complementary metal oxide semiconductor (CMOS) image sensor or the like. The imaging device 16 outputs image data representing images obtained by imaging by the imaging device.

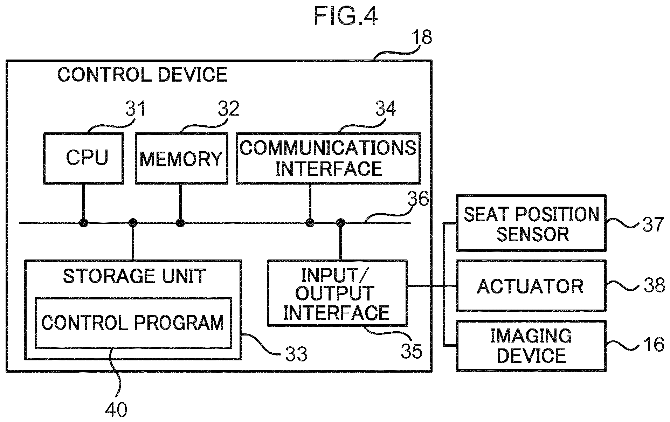

Now, hardware structures of the control device 18 are described with reference to Fig. 4. As illustrated in Fig. 4, the control device 18 includes a central processing unit (CPU) 31, a memory 32 that serves as a temporary storage area, and a nonvolatile storage unit 33. The control device 18 also includes a communications interface 34 that is connected to the network N, and an input/output interface 35. A seat position sensor 37, an actuator 38 and the imaging device 16 are connected to the input/output interface 35. The CPU 31, memory 32, storage unit 33, communications interface 34 and input/output interface 35 are connected to a bus 36.

The CPU 31 adjusts the seat position of the driver seat in the vehicle 14 (in the present exemplary embodiment, the front-rear position, the height position and the reclining angle) by controlling the actuator 38 via the input/output interface 35. The seat position sensor 37 detects a current seat position of the driver seat in the vehicle 14. The CPU 31 acquires the current seat position of the driver seat that is detected by the seat position sensor 37 via the input/output interface 35. The CPU 31 also acquires, via the input/output interface 35, image data representing images imaged at a pre-specified frame rate by the imaging device 16.

A control program 40 is stored in the storage unit 33. The CPU 31 reads the control program 40 from the storage unit 33, loads the control program 40 into the memory 32, and executes the loaded control program 40. Information relating to the vehicle 14, such as the length, engine displacement and the like of the vehicle 14, is also stored in the storage unit 33.

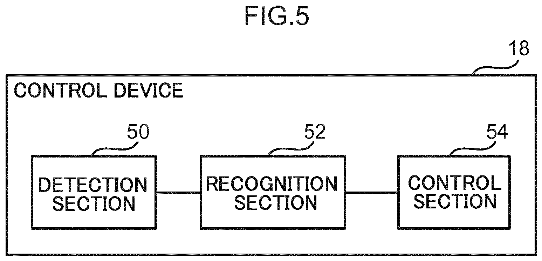

Now, functional structures of the control device 18 according to the present exemplary embodiment are described with reference to Fig. 5. As illustrated in Fig. 5, the control device 18 includes a detection section 50, a recognition section 52 and a control section 54. By executing the control program 40 stored in the storage unit 33, the CPU 31 of the control device 18 functions as the detection section 50, recognition section 52 and control section 54 illustrated in Fig. 5.

The detection section 50 detects that an occupant is located within a predetermined distance from the vehicle 14. More specifically, in a case in which the detection section 50 detects that electromagnetic waves emitted at a pre-specified frequency from an electronic key have been received, the detection section 50 detects that the occupant who carries that electronic key is within the predetermined distance from the vehicle 14. Alternatively, after the detection section 50 establishes communication by short-range wireless communications, such as Bluetooth^{®} or the like, with a portable information terminal (for example, a smartphone) registered in advance with the vehicle 14, the detection section 50 detects that the occupant who carries that portable information terminal is within the predetermined distance from the vehicle 14.

The recognition section 52 recognizes information relating to the outward form of the occupant. In the present exemplary embodiment, in a case in which the detection section 50 detects that an occupant is located within the predetermined distance from the vehicle 14, the recognition section 52 estimates the location of the occupant from the strength and direction of electromagnetic waves used for the detection, and controls the imaging device 16 so as to image the occupant at the estimated location. The recognition section 52 acquires image data representing images imaged by the imaging device 16 at the pre-specified frame rate.

By applying image analysis processing to the images represented by the acquired image data, the recognition section 52 recognizes the face of the occupant, the body type of the occupant and the clothing of the occupant. The body type of the occupant that the recognition section 52 first recognizes is the general body type of the occupant and the frame of the occupant. The recognition section 52 then recognizes the detailed body type of the occupant from the recognized frame of the occupant by estimating the arm length, leg length and pelvis position of the occupant. The recognition section 52 also identifies the vehicle type of the vehicle 14 on the basis of the information relating to the vehicle 14 that is stored in the storage unit 33.

The control section 54 executes control to, before the occupant boards the vehicle 14, adjust the seat position of the driver seat in the vehicle 14 to a position that is specified as being an optimal position corresponding with the information relating to the vehicle type of the vehicle 14 and the outward form of the occupant that has been recognized by the recognition section 52. More specifically, in a case in which the detection section 50 has detected that the occupant is located within the predetermined distance from the vehicle 14, the control section 54 first sends to the information processing device 12 the vehicle type of the vehicle 14 and the body type of the occupant and clothing of the occupant recognized by the recognition section 52.

After the information processing device 12 receives the vehicle type, body type of the occupant and clothing of the occupant sent from the control device 18, the information processing device 12 refers to the accumulated data 20 and acquires a seat position corresponding with the received vehicle type, body type of the occupant and clothing of the occupant. Then, the information processing device 12 sends the acquired seat position to the control device 18.

The control section 54 of the control device 18 receives the seat position sent from the information processing device 12 that corresponds with the vehicle type, body type of the occupant and clothing of the occupant that were sent to the information processing device 12. The control section 54 acquires a current seat position of the driver seat that is detected by the seat position sensor 37.

The control section 54 controls the actuator 38 such that an acquired current seat position of the driver seat matches up with the received seat position. Thus, the control section 54 adjusts the seat position of the driver seat to the position specified as being the optimal position.

If the seat position is modified by the vehicle occupant after the control section 54 has executed the control to adjust the seat position, the control section 54 executes control to update the seat position in the accumulated data 20 that corresponds with the information relating to the vehicle and the outward form of the occupant to the seat position that has been modified by the occupant.

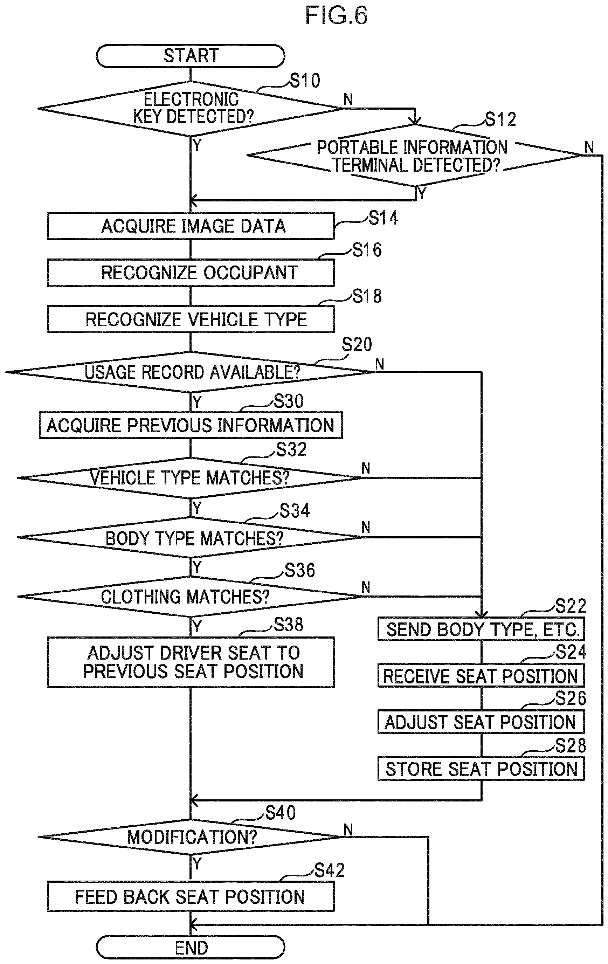

Now, operation of the control device 18 according to the present exemplary embodiment is described with reference to Fig. 6. Fig. 6 is a flowchart illustrating an example of a flow of seat position adjustment processing that is executed by the CPU 31 of the control device 18 according to the present exemplary embodiment. The seat position adjustment processing illustrated in Fig. 6 is executed by the CPU 31 executing the control program 40 stored in advance in the storage unit 33. For example, the seat position adjustment processing illustrated in Fig. 6 is executed periodically at a predetermined time interval.

In step S10 of Fig. 6, as described above, the detection section 50 makes a determination as to whether electromagnetic waves emitted at a predetermined frequency from an electronic key have been received. If the result of this determination is negative, the processing advances to step S12, and if the result of the determination is affirmative, the processing advances to step S14. In step S12, as described above, the detection section 50 makes a determination as to whether communication by short-range wireless communications has been established with a portable information terminal registered in advance with the vehicle 14. If the result of this determination is affirmative, the processing advances to step S14.

In step S14, the recognition section 52 estimates the location of the occupant from the strength and direction of the electromagnetic waves detected in the processing of step S10 or step S12, and the recognition section 52 controls the imaging device 16 so as to image the occupant at the estimated location. The recognition section 52 then acquires image data representing images imaged by the imaging device 16 at the pre-specified frame rate.

In step S16, as described above, the recognition section 52 recognizes the face of the occupant, the body type of the occupant and the clothing of the occupant by applying image analysis processing to images represented by the image data acquired by the processing of step S14. In step S18, the recognition section 52 recognizes the vehicle type of the vehicle 14 on the basis of the information relating to the vehicle 14 that is stored in the storage unit 33.

In step S20, the control section 54 makes a determination as to whether there is a usage record of adjustment of the seat position by this seat position adjustment processing for the occupant of the vehicle 14. More specifically, the control section 54 makes a determination as to whether a seat position corresponding with an occupant identified from the face of the occupant recognized in step S16 has previously been stored in the storage unit 33 by the processing of step S28, which is described below. If the result of this determination is negative, the processing advances to step S22.

In step S22, the control section 54 sends to the information processing device 12 the vehicle type of the vehicle 14 recognized in the processing of step S18 and the body type of the occupant and clothing of the occupant recognized in the processing of step S16. As described above, the information processing device 12 acquires from the accumulated data 20 the seat position that corresponds with the vehicle type, body type of the occupant and clothing of the occupant received from the control device 18 by the processing of step S22, and the information processing device 12 sends the acquired seat position to the control device 18.

In step S24, the control section 54 receives the seat position sent from the information processing device 12. In step S26, the control section 54 acquires a current seat position of the driver seat that is detected by the seat position sensor 37. The control section 54 then adjusts the seat position of the driver seat to the position specified as being the optimal position, by controlling the actuator 38 such that an acquired current seat position of the driver seat matches up with the seat position received in the processing of step S24.

In step S28, the control section 54 stores the seat position received in the processing of step S24 at the storage unit 33 in association with the occupant identified from the face of the occupant recognized in the processing of step S16. The control section 54 also stores at the storage unit 33 the body type of the occupant and clothing of the occupant recognized in the processing of step S16 and the vehicle type recognized in the processing of step S18. After the processing of step S28 is complete, the processing advances to step S40.

Alternatively, if the result of the determination in step S20 is affirmative, the processing advances to step S30. In step S30, the control section 54 acquires previous information, which is a vehicle type, body type of the occupant, clothing of the occupant, and seat position that have been stored at the storage unit 33 in association with the occupant identified by the processing of step S16.

In step S32, the control section 54 makes a determination as to whether the vehicle type recognized in the processing of step S18 is the same as the previous vehicle type acquired in the processing of step S30. If the result of this determination is negative, the processing advances to step S22, and if the result of the determination is affirmative, the processing advances to step S34.

In step S34, the control section 54 makes a determination as to whether the body type of the occupant recognized in the processing of step S16 is the same as the previous body type acquired in the processing of step S30. If the result of this determination is negative, the processing advances to step S22, and if the result of the determination is affirmative, the processing advances to step S36.

In step S36, the control section 54 makes a determination as to whether the clothing of the occupant recognized in the processing of step S16 is the same as the previous clothing acquired in the processing of step S30. If the result of this determination is negative, the processing advances to step S22, and if the result of the determination is affirmative, the processing advances to step S38.

In step S38, the control section 54 acquires a current seat position of the driver seat detected by the seat position sensor 37. The control section 54 then adjusts the seat position of the driver seat to the position specified as being the optimal position, by controlling the actuator 38 such that an acquired current seat position of the driver seat matches up with the previous seat position acquired in the processing of step S30. After the processing of step S38 is complete, the processing advances to step S40.

In step S40, the control section 54 makes a determination as to whether the seat position of the driver seat is modified by a manual operation by the occupant from the seat position that has been adjusted by the processing of step S26 or step S38. If the result of this determination is affirmative, the processing advances to step S42.

In step S42, the control section 54 acquires a seat position of the driver seat subsequent to the modification that is detected by the seat position sensor 37. The control section 54 then gives feedback to the information processing device 12 by sending the acquired seat position to the information processing device 12. The information processing device 12 receives the modified seat position sent from the control device 18, and uses the received modified seat position to update the seat position in the accumulated data 20 that corresponds with the vehicle type, body type of the occupant and clothing of the occupant.

Here, rather than the information processing device 12 simply updating the accumulated data 20 every time a modified seat position is received, the information processing device 12 may update the accumulated data 20, for example, after a modified seat position is successively received on at least a predetermined number of occasions of use. Alternatively, the information processing device 12 may update the accumulated data 20, for example, after a frequency at which a modified seat position is received is at least a predetermined value, such as having received a modified seat position on at least eight of the ten most recent occasions of use or the like.

After the processing of step S42 is complete, the seat position adjustment processing ends. The seat position adjustment processing also ends in a case in which the result of the determination in step S12 is negative or the result of the determination in step S40 is negative.

According to the present exemplary embodiment as described above, before an occupant boards a vehicle, a seat position in the vehicle is adjusted to a position specified as being an optimal position corresponding with information relating to the vehicle that the occupant is boarding and the outward form of the occupant. Thus, the seat position is adjusted to a suitable position before the occupant boards the vehicle, as a result of which the occupant may board the vehicle with convenience.

In the exemplary embodiment described above, a case in which the seat position of a driver seat is adjusted is described, but this is not limiting. For example, a mode is possible that adjusts the seat position of a seat other than a driver seat, such as a front passenger seat or the like.

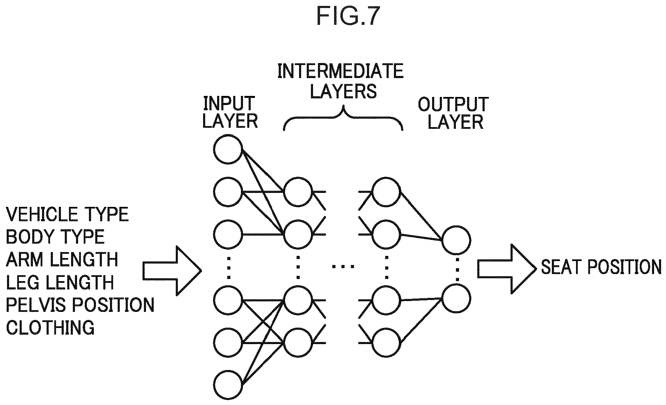

In the exemplary embodiment described above, a case is described in which the optimal seat position of the driver seat is acquired by acquiring corresponding data from the accumulated data 20, but this is not limiting. For example, a mode is possible in which an optimal seat position of the driver seat is acquired by using a learning model based on machine learning, such as a neural network model or the like. An example of this learning model is illustrated in Fig. 7. As illustrated in Fig. 7, the learning model in this example may be implemented by, for example, a deep neural network that inputs information relating to the vehicle type of the vehicle and the outward form of the occupant and outputs a seat position of the driver seat. A back propagation algorithm using training data can be mentioned as an example of a learning algorithm in this example.

The processing executed by the CPU 31 in the exemplary embodiment described above is described as software processing that is implemented by execution of a program, but may be processing that is implemented by hardware. Further, the processing executed by the CPU 31 may be processing that is implemented by a combination of both software and hardware. The control program 40 that is stored in the storage unit 33 may be stored in any of various storage media and distributed.

The present disclosure is not limited by the above recitations. In addition to the above recitations, it will be clear that numerous modifications may be embodied within a technical scope as long as they fall within the scope of the claims.

## Claims

1. A control device (18) for a vehicle, comprising:
a recognition section (52) that is configured to recognize information relating to an outward form of an occupant; and
a control section (54) that is configured to execute control, before the occupant boards the vehicle, to adjust a seat position in the vehicle to a specified position that is specified as being an optimal position according to information relating to the vehicle that the occupant is boarding and the information relating to the outward form of the occupant recognized by the recognition section (54),
**characterized in that** the information relating to the outward form of the occupant includes information relating to a body type of the occupant and clothing of the occupant.

2. The control device (18) for a vehicle according to claim 1, wherein the control section (54) is configured to acquire the specified position corresponding to the information relating to the vehicle and the outward form of the occupant from historical accumulated data, and to execute the control to adjust the seat position to the acquired position.

3. The control device (18) for a vehicle according to claim 1 or claim 2, wherein the body type of the occupant includes an arm length, a leg length and a pelvis position of the occupant.

4. The control device (18) for a vehicle according to any of claims 1 to 3, further comprising a detection section (50) that is configured to detect when the occupant is located within a predetermined distance from the vehicle,
wherein the control section (54) is configured to execute the control in a case in which the detection section detects that the occupant is located within the predetermined distance from the vehicle.

5. The control device (18) for a vehicle according to claim 2, wherein the control section (54) is configured to execute control, if the seat position is modified by the occupant after the control to adjust the seat position is executed, to update the specified position in the historical data corresponding with the information relating to the vehicle and the outward form of the occupant to the seat position subsequent to the modification by the occupant.

6. The control device (18) for a vehicle according to any of claims 2 to 5, wherein
the historical accumulated data (20) is intended to be stored at an information processing device (12) outside the vehicle, and
the control section (54) is configured to send at least the information relating to the outward form of the occupant to the information processing device and to receive the specified position corresponding with the information relating to the vehicle and the outward form of the occupant from the information processing device (12).

7. A vehicle control system (10) comprising:
the control device (18) for a vehicle according to any of claims 1 to 6; and
an information processing device (12) that stores accumulated data (20) of seat positions corresponding with vehicles and outward forms of occupants,
wherein the control section (54) of the control device (18) is configured to:
send the information relating to the vehicle and the outward form of the occupant to the information processing device (12),
receive the specified position corresponding with the information relating to the vehicle and the outward form of the occupant from the information processing device (12), and
execute the control to adjust the seat position to the received specified position.

8. A vehicle control method comprising:
recognizing (S16) information relating to an outward form of an occupant; and
before the occupant boards the vehicle, executing (S38, S26) control to adjust a seat position in the vehicle to a specified position that is specified as being an optimal position according to information relating to the vehicle that the occupant is boarding and the recognized information relating to the outward form of the occupant,
**characterized by** the information relating to the outward form of the occupant including information relating to a body type of the occupant and clothing of the occupant.

9. A non-transitory storage medium that stores a program to cause a computer to execute a vehicle control processing, the vehicle control processing:
recognizing (S16) information relating to an outward form of an occupant; and
before the occupant boards the vehicle, executing (S38, S26) control to adjust a seat position in the vehicle to a specified position that is specified as being an optimal position according to information relating to the vehicle that the occupant is boarding and the recognized information relating to the outward form of the occupant,
**characterized by** the information relating to the outward form of the occupant including information relating to a body type of the occupant and clothing of the occupant.

## Patentansprüche

1. Steuervorrichtung (18) für ein Fahrzeug, umfassend:
eine Erkennungssektion (52), die dazu ausgestaltet ist, Informationen in Bezug auf eine äußere Gestalt eines Insassen zu erkennen, und
eine Steuerungssektion (54), die dazu ausgestaltet ist, eine Steuerung auszuführen, bevor der Insasse in das Fahrzeug einsteigt, um eine Sitzposition in dem Fahrzeug auf eine vorgegebene Position einzustellen, die gemäß Informationen in Bezug auf das Fahrzeug, in welches der Insasse einsteigt, und den Informationen in Bezug auf die äußere Gestalt des Insassen, die von der Erkennungssektion (54) erkannt wurden, als eine optimale Position vorgegeben wird,
**dadurch gekennzeichnet, dass** die Informationen in Bezug auf die äußere Gestalt des Insassen Informationen in Bezug auf einen Körpertyp des Insassen und Bekleidung des Insassen beinhalten.

2. Steuervorrichtung (18) für ein Fahrzeug nach Anspruch 1, wobei die Steuerungssektion (54) dazu ausgestaltet ist, die vorgegebene Position entsprechend den Informationen in Bezug auf das Fahrzeug und die äußere Gestalt des Insassen aus gesammelten historischen Daten zu ermitteln, und die Steuerung auszuführen, um die Sitzposition auf die ermittelte Position einzustellen.

3. Steuervorrichtung (18) für ein Fahrzeug nach Anspruch 1 oder Anspruch 2, wobei der Körpertyp des Insassen eine Armlänge, eine Beinlänge und eine Beckenposition des Insassen beinhaltet.

4. Steuervorrichtung (18) für ein Fahrzeug nach einem der Ansprüche 1 bis 3, ferner umfassend eine Erfassungssektion (50), die dazu ausgestaltet ist, zu erfassen, wann der Insasse sich innerhalb eines vorbestimmten Abstands zu dem Fahrzeug befindet,
wobei die Steuerungssektion (54) dazu ausgestaltet ist, die Steuerung in einem Fall auszuführen, in dem die Erfassungssektion erfasst, dass der Insasse sich innerhalb des vorbestimmten Abstands zu dem Fahrzeug befindet.

5. Steuervorrichtung (18) für ein Fahrzeug nach Anspruch 2, wobei die Steuerungssektion (54) dazu ausgestaltet ist, die Steuerung auszuführen, wenn die Sitzposition von dem Insassen modifiziert wird, nachdem die Steuerung zur Einstellung der Sitzposition ausgeführt wurde, um die vorgegebene Position in den historischen Daten entsprechend den Informationen in Bezug auf das Fahrzeug und die äußere Gestalt des Insassen auf die Sitzposition nach der Modifikation durch den Insassen zu aktualisieren.

6. Steuervorrichtung (18) für ein Fahrzeug nach einem der Ansprüche 2 bis 5, wobei
die gesammelten historischen Daten (20) dazu vorgesehen sind, in einer Informationsverarbeitungsvorrichtung (12) außerhalb des Fahrzeugs gespeichert zu werden, und
die Steuerungssektion (54) dazu ausgestaltet ist, zumindest die Informationen in Bezug auf die äußere Gestalt des Insassen an die Informationsverarbeitungsvorrichtung zu senden und die vorgegebene Position entsprechend den Informationen in Bezug auf das Fahrzeug und die äußere Gestalt des Insassen von der Informationsverarbeitungsvorrichtung (12) zu empfangen.

7. Fahrzeug-Steuersystem (10) umfassend:
die Steuervorrichtung (18) für ein Fahrzeug nach einem der Ansprüche 1 bis 6, und
eine Informationsverarbeitungsvorrichtung (12), die gesammelte Daten (20) von Sitzpositionen entsprechend Fahrzeugen und äußeren Gestalten von Insassen speichert,
wobei die Steuerungssektion (54) der Steuervorrichtung (18) dazu ausgestaltet ist:
die Informationen in Bezug auf das Fahrzeug und die äußere Gestalt des Insassen an die Informationsverarbeitungsvorrichtung (12) zu senden,
die vorgegebene Position entsprechend den Informationen in Bezug auf das Fahrzeug und die äußere Gestalt des Insassen von der Informationsverarbeitungsvorrichtung (12) zu empfangen, und
die Steuerung auszuführen, um die Sitzposition auf die empfangene vorgegebene Position einzustellen.

8. Fahrzeug-Steuerverfahren, umfassend:
Erkennen (S16) von Informationen in Bezug auf eine äußere Gestalt eines Insassen, und
bevor der Insasse in das Fahrzeug einsteigt, Ausführen (S38, S26) der Steuerung, um eine Sitzposition in dem Fahrzeug auf eine vorgegebene Position einzustellen, die gemäß Informationen in Bezug auf das Fahrzeug, in welches der Insasse einsteigt, und den erkannten Informationen in Bezug auf die äußere Gestalt des Insassen als eine optimale Position vorgegeben wird,
**dadurch gekennzeichnet, dass** die Informationen in Bezug auf die äußere Gestalt des Insassen Informationen in Bezug auf einen Körpertyp des Insassen und Bekleidung des Insassen beinhalten.

9. Nicht transitorisches Speichermedium, das ein Programm speichert, um einen Computer zu veranlassen, eine Fahrzeug-Steuerverarbeitung durchzuführen, wobei die Fahrzeug-Steuerverarbeitung umfasst:
Erkennen (S16) von Informationen in Bezug auf eine äußere Gestalt eines Insassen, und
bevor der Insasse in das Fahrzeug einsteigt, Ausführen (S38, S26) der Steuerung, um eine Sitzposition in dem Fahrzeug auf eine vorgegebene Position einzustellen, die gemäß Informationen in Bezug auf das Fahrzeug, in welches der Insasse einsteigt, und den erkannten Informationen in Bezug auf die äußere Gestalt des Insassen als eine optimale Position vorgegeben wird,
**dadurch gekennzeichnet, dass** die Informationen in Bezug auf die äußere Gestalt des Insassen Informationen in Bezug auf einen Körpertyp des Insassen und Bekleidung des Insassen beinhalten.

## Revendications

1. Dispositif de commande (18) pour un véhicule, comprenant :
une section de reconnaissance (52) qui est configurée pour reconnaître de l'information se rapportant à une forme extérieure d'un occupant ; et
une section de commande (54) qui est configurée pour exécuter une commande, avant que l'occupant monte à bord du véhicule, pour ajuster une position de siège dans le véhicule à une position spécifiée qui est spécifiée comme étant une position optimale en fonction d'une information se rapportant au véhicule dans lequel l'occupant monte et de l'information se rapportant à la forme extérieure de l'occupant reconnue par la section de reconnaissance (54),
**caractérisé en ce que** l'information se rapportant à la forme extérieure de l'occupant comprend de l'information se rapportant à un type de corps de l'occupant et à l'habillement de l'occupant.

2. Dispositif de commande (18) pour un véhicule selon la revendication 1, dans lequel la section de commande (54) est configurée pour acquérir la position spécifiée correspondant à l'information se rapportant au véhicule et à la forme extérieure de l'occupant à partir de données accumulées historiques, et pour exécuter la commande pour ajuster la position de siège à la position acquise.

3. Dispositif de commande (18) pour un véhicule selon la revendication 1 ou la revendication 2, dans lequel le type de corps de l'occupant comprend une longueur de bras, une longueur de jambe et une position de bassin de l'occupant.

4. Dispositif de commande (18) pour un véhicule selon l'une quelconque des revendications 1 à 3, comprenant en outre une section de détection (50) qui est configurée pour détecter quand l'occupant se trouve à une distance prédéterminée du véhicule,
la section de commande (54) étant configurée pour exécuter la commande dans un cas dans lequel la section de détection détecte que l'occupant se trouve à la distance prédéterminée du véhicule.

5. Dispositif de commande (18) pour un véhicule selon la revendication 2, dans lequel la section de commande (54) est configurée pour exécuter une commande, si la position de siège est modifiée par l'occupant une fois que la commande pour ajuster la position de siège est exécutée, pour mettre à jour la position spécifiée dans les données historiques correspondant à l'information se rapportant au véhicule et à la forme extérieure de l'occupant à la position de siège à la suite de la modification par l'occupant.

6. Dispositif de commande (18) pour un véhicule selon l'une quelconque des revendications 2 à 5, dans lequel
les données accumulées historiques (20) sont prévues pour être stockées dans un dispositif de traitement d'information (12) à l'extérieur du véhicule, et
la section de commande (54) est configurée pour envoyer au moins l'information se rapportant à la forme extérieure de l'occupant au dispositif de traitement d'information et pour recevoir la position spécifiée correspondant à l'information se rapportant au véhicule et à la forme extérieure de l'occupant du dispositif de traitement d'information (12).

7. Système de commande de véhicule (10) comprenant :
le dispositif de commande (18) pour un véhicule selon l'une quelconque des revendications 1 à 6 ; et
un dispositif de traitement d'information (12) qui stocke des données accumulées (20) des positions de siège correspondant à des véhicules et à des formes extérieures d'occupants,
la section de commande (54) du dispositif de commande (18) étant configurée pour :
envoyer l'information se rapportant au véhicule et à la forme extérieure de l'occupant au dispositif de traitement d'information (12),
recevoir la position spécifiée correspondant à l'information se rapportant au véhicule et à la forme extérieure de l'occupant du dispositif de traitement d'information (12), et
exécuter la commande pour ajuster la position de siège à la position spécifiée reçue.

8. Procédé de commande de véhicule comprenant le fait de :
reconnaître (S16) de l'information se rapportant à une forme extérieure d'un occupant ; et
avant que l'occupant monte à bord du véhicule, exécuter (S38, S26) une commande pour ajuster une position de siège dans le véhicule à une position spécifiée qui est spécifiée comme étant une position optimale en fonction d'une information se rapportant au véhicule dans lequel l'occupant monte et de l'information reconnue se rapportant à la forme extérieure de l'occupant,
**caractérisé par** l'information se rapportant à la forme extérieure de l'occupant comprenant de l'information se rapportant à un type de corps de l'occupant et à l'habillement de l'occupant.

9. Support de stockage non-transitoire qui stocke un programme pour amener un ordinateur à exécuter un traitement de commande de véhicule, le procédé de commande de véhicule :
reconnaissant (S16) de l'information se rapportant à une forme extérieure d'un occupant ; et
avant que l'occupant monte à bord du véhicule, exécutant (S38, S26) une commande pour ajuster une position de siège dans le véhicule à une position spécifiée qui est spécifiée comme étant une position optimale en fonction d'une information se rapportant au véhicule dans lequel l'occupant monte et de l'information reconnue se rapportant à la forme extérieure de l'occupant,
**caractérisé par** l'information se rapportant à la forme extérieure de l'occupant comprenant de l'information se rapportant à un type de corps de l'occupant et à l'habillement de l'occupant.
